# EUROPEAN PATENT SPECIFICATION

(11) **EP 1 724 166 B1**
(45) Date of publication and mention of the grant of the patent: **23.03.2011**
(21) Application number: 06010420.5
(22) Date of filing: 19.05.2006
(51) Int. Cl.: B60R 25/02

(54) **Vehicle controller for straddle-type vehicle**
Fahrzeugsteuerungsvorrichtung für Spreitzsitz-Fahrzeug
Contrôleur de véhicule pour un véhicule du type monté à califourchon

(30) Priority: 20.05.2005 JP 2005148595
(43) Date of publication of application: 22.11.2006
(73) Proprietor: Yamaha Hatsudoki Kabushiki Kaisha, Shizuoka-ken 438-8501 (JP)
(72) Inventor: Unno, Hitoshi, Iwata-shi, Shizuoka-ken 438-8501, (JP)
(74) Representative: Grünecker, Kinkeldey, Stockmair & Schwanhäusser Anwaltssozietät

(56) References cited:
- EP-A- 1 108 631
- EP-A- 1 504 986
- DE-A1- 10 125 064
- DE-A1- 10 203 462

## Description

The present invention relates to a vehicle controller for a straddle type vehicle, and particularly to a vehicle controller provided with an antitheft function.

For commonly used two-wheeled motor vehicles, engine start/stop and locking/unlocking of the steering are performed by mechanical key operation that must involve inserting a key into a keyhole before key operation, which is burdensome. Thus, a remote control system has been proposed in which an owner of the vehicle carries a portable transmitter (portable device) for transmitting a signal to the vehicle to remotely control the engine for its startup and the steering lock for unlocking. This system ensures security by coding the signal to be transmitted to the vehicle as well as by authenticating the received encrypted signal with an authentication function installed on the vehicle.

JP-A-Hei 3-21575 discloses a conventional art of such authentication system. In this system, after authentication succeeds, a power circuit for driving the vehicle is switched-ON, and under this condition, an engine start circuit and a lock/unlock actuator, such as steering lock, are enabled, so that a starting and a release switches are manually operated to start-up the engine and release the steering lock, respectively. According to this system, if the authentication fails, the power circuit for driving the vehicle cannot be switched-ON, which disables the engine and the release function of the steering lock to provide antitheft protection for the vehicle.

In addition, JP-A-Hei 6-247260 discloses another conventional art of the authentication system with a non-contact IC card. If authentication succeeds, the steering lock is released while the engine is set to be enabled in conjunction with the release of the steering lock. Engine enabled state setting means as well as steering lock release means are accommodated together in a rigid steering lock unit, thereby preventing from compulsory engine start-up by an unauthenticated driver.

According to the disclosure of JP-A-Hei 3-21575 if authentication is determined to be successful, the engine start circuit and the unlock actuator, such as the steering lock, are enabled. But indeed, manual operation of the starting and release switches is necessary for engine start-up and release of the steering lock, respectively. Thus, in the case where moving a vehicle without starting-up the engine is desired solely for the purpose of maintenance or the like, releasing the steering lock must involve manual operation of the release switch after authentication is determined to be successful, which is burdensome.

In contrast, according to the disclosure of JP-A-Hei 6-247260 if authentication is determined to be successful, the steering lock is released, which is less burdensome than the conventional art described above. However, in order to ensure security, the engine enabled state setting means should be accommodated in the steering lock unit, and accordingly a volume of the unit increases, which disadvantageously limits a layout space for the unit.

The document EP-A-1504986 according to the preamble of claim 1 discloses a vehicle controller for two-wheel vehicles, boats or the like comprising a portable device for transmitting a signal and a base station for receiving and authenticating the signal. A first function unit permits control of Injection or Ignition of the engine of the two-wheel vehicle, and a second function unit permits control of an electric motor of a locking mechanism of a steering column of the two-wheel vehicle. Upon successful authentication of the signal of the portable device, power Is supplied to the locking mechanism of the steering column. An encrypted signal is communicated between a base station and the locking mechanism, wherein upon successful authentication of the encrypted signal, an unlock means is actuated for the locking mechanism.

The present invention is derived from the foregoing problems, and an object of the invention is to provide a vehicle controller for a straddle type vehicle, which offers improved maintenance convenience and high security vehicle antitheft system.

This objective is solved by the features of claim 1.

According to one embodiment, the vehicle controller further comprises a control unit, wherein, if the authentication of the signal of the portable device is determined to be successful, power is supplied from the control unit to the steering lock, while communication of the encrypted signal from the control unit to the steering lock is conducted, and then, if authentication of the encrypted signal is successful, the unlock means for the steering lock is actuated.

Yet further preferably, the unlock means is an actuator.

According to another embodiment, the control unit and the steering lock are connected via a communication line established by a commonly used controller area network (CAN) or by a serial communication.

There might be further provided a straddle-type vehicle having a vehicle controller according to one of the above embodiments.

Therein, preferably, the control unit and the steering lock are separate units located at different places of the vehicle, and being connected by the communication line.

In the following, the present invention is explained in further detail with respect to several embodiments thereof in conjunction with the accompanying drawings, wherein:
- FIG. 1: is a block diagram illustrating a basic configuration of a vehicle controller for a two-wheeled motor vehicle according to a different controller not part of the invention, but important for its understanding,
- FIG. 2: is a flow chart illustrating a vehicle control method using the vehicle controller of figur 1,
- FIG. 3: is a block diagram illustrating a basic configuration of a vehicle controller for a two-wheeled motor vehicle according to one embodiment,
- FIG. 4: is a flow chart illustrating a vehicle control method using the vehicle controller according to the embodiment of figur 3, and

- FIG. 5: illustrates an example in which the vehicle controller for a two-wheeled motor vehicle is mounted to the vehicle.

### Description of Reference Numerals and Symbols:

10: portable device
20: control unit
21: receiver
21': transmitter-receiver
22: authentication means
23: control unit power source
24: steering lock power source
26: activating switch
30: steering lock
31: unlock means (actuator)
33: unlock switch
40: communication line
50: seat
60: handlebars
100, 110: vehicle controller
120: two-wheeled motor vehicle

An embodiment is described below with reference to the drawings. In the drawings below, for the sake of simplifying explanation, components having substantially the same function are indicated with the same reference symbol. Further, the teaching of the present invention is not limited to the following embodiment.

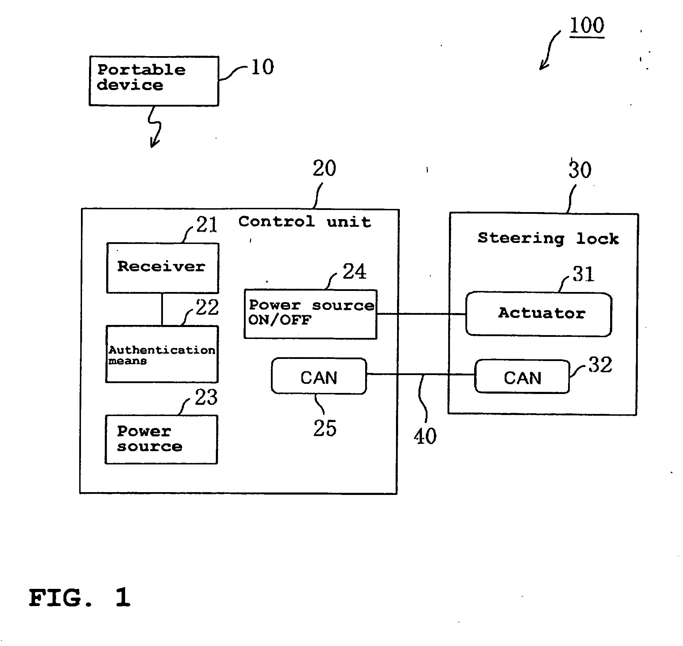

FIG. 1 is a block diagram illustrating a basic configuration of a vehicle controller 100 for a two-wheeled motor vehicle.

This vehicle controller 100 has an authentication system including: a portable device 10, which a rider carries, for transmitting a code signal; a receiver 21 installed in the vehicle for receiving the code signal; and authentication means 22 for identifying the received code signal to authenticate whether or not a rider is an owner of the vehicle.

A non-contact IC card, a remote control switch or the like may be used as the portable device 10. For example, in the case of using the non-contact IC card, the code signal need be stored in the non-contact IC card in advance. The IC card is brought close to the receiver 21 to make the card read out the code signal, which is transmitted to the authentication means 22 for code identification. In turn, in the case of using the remote control switch, an infrared signal corresponding to the code signal is transmitted through switch operation to the receiver 21, and then transmitted to the authentication means 22 for code identification.

In the authentication system of the embodiment, if code authentication is successful, power is supplied (turn a power source 24 ON) from the control unit 20 to the steering lock 30, while communication of an encrypted signal between the control unit 20 and the steering lock 30 is conducted via a communication line 40. If authentication of the encrypted signal is successful, the unlock control section of the steering lock actuates unlock means (actuator) 31 for the steering lock 30 to unlock the steering lock 30.

The encrypted signal identification system via the communication line 40 can be established by a commonly used controller area network (CAN) system. Unlock of the steering lock 30 is permitted by the identification system using the CAN system. Should false wiring be installed in the unlock means (actuator) 31 for the steering lock 30, identification using the CAN system is not allowed, thereby preventing the steering lock 30 from being compulsively unlocked. This can improve security of the vehicle antitheft system. If the identification is truly implemented, the steering lock is unlocked without starting-up the engine, so that the vehicle can be moved. This facilitates maintenance and other work. In place of the CAN system, a less costly serial communication may be used.

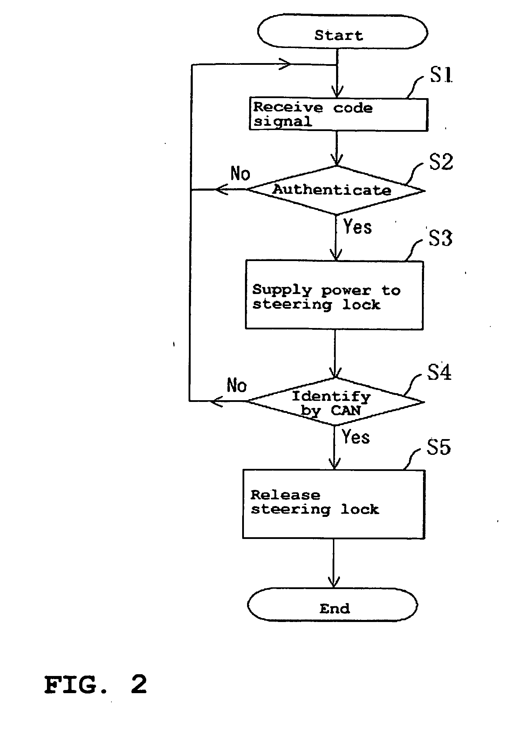

Now, a vehicle control method using the vehicle controller 100 of FIG. 1 will be described with reference to a flowchart shown in FIG. 2.

Initially, a code signal is transmitted from the portable device 10 which a rider carries, and then received by the receiver 21 provided on the vehicle (step S1) to identify the code signal with a reference code preset by the authentication means 22 (step S2).

If the authentication is determined to be successful, which means the rider has been identified as an owner of the vehicle, power is supplied from the control unit 20 to the steering lock 30 (step S3), while an encrypted signal is identified using the CAN system between the control unit 20 and the steering lock 30 (step S4). If authentication of the encrypted signal is successful, the steering lock 30 is unlocked (step S5). These conditions allow the rider to move the vehicle, so that the rider can start vehicle inspection, maintenance or other work immediately. It should be understood that if the authentication fails, the steering lock 30 remains locked, thus providing antitheft protection for the vehicle.

### (Embodiment )

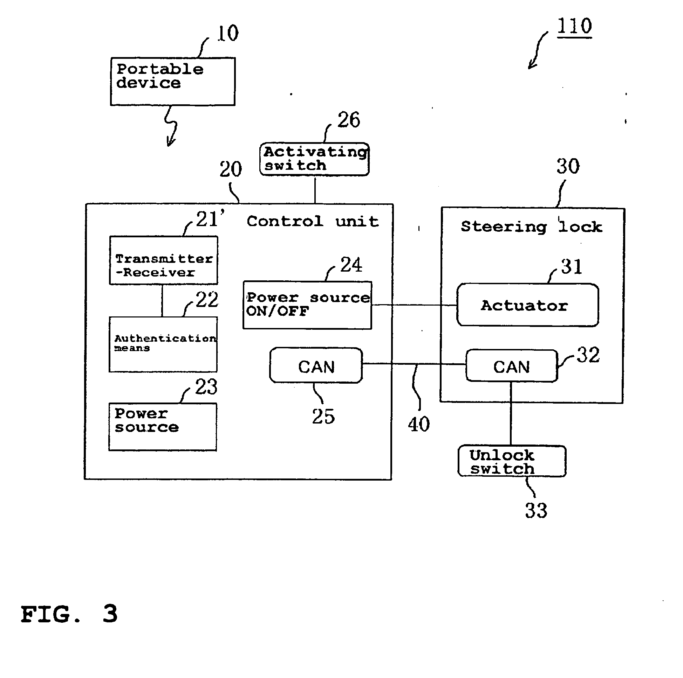

FIG. 3 is a block diagram illustrating a basic configuration of a vehicle controller 110 for a two-wheeled motor vehicle according to a first embodiment.

The vehicle controller 110 of the embodiment has an authentication system as follows: Through the operation of an activating switch 26 provided on the vehicle, a power source 23 of the control unit 20 is ON, while a request signal is transmitted from the transmitter-receiver 21' to the portable device 10 which the rider carries. In response to the request signal, the portable device 10 issues a code signal, which is received by the transmitter-receiver 21', and identified by the authentication means 22 to authenticate whether or not the rider is an owner of the vehicle. Alternatively, the vehicle may constantly issue a code signal instead of transmitting a request signal.

This authentication system neither involves a need to bring the portable device 10 close to the receiver 21, unlike a non-contact IC card, nor involves switch operation, unlike a remote control switch that need be taken out for every use. Thus, a rider, who solely carries the portable device 10 in his/her pocket or the like, can simply operate the activating switch mounted to the vehicle to obtain high security authentication, whereby excellent usability is achieved.

In the authentication system of the embodiment, if code authentication is successful, power is supplied (turn the power source 24 ON) from the control unit 20 to the steering lock 30. Under this condition, through the operation of an unlock switch 33, communication of an encrypted signal between the control unit 20 and the steering lock 30 is conducted via the communication line 40. If authentication of the encrypted signal is successful, the unlock control section of the steering lock actuates the unlock means (actuator) 31 for the steering lock 30 to unlock the steering lock.

The identification system of the encrypted signal via the communication line 40 can use the CAN system, which is the same as used for the vehicle controller 100 shown in FIG. 1 or serial communication. Thus, should false wiring be installed in the unlock means (actuator) 31 for the steering lock 30, compulsory unlock of the steering lock 30 must be avoided, thereby improving security of the vehicle antitheft system. If the identification is truly implemented, the steering lock is unlocked without starting-up the engine, so that the vehicle can be moved. This facilitates maintenance and other work. Further, unlock of the steering lock 30 is activated with the unlock switch 33 that can be operated depending on the rider's intent, thereby increasingly improving security of the vehicle antitheft system.

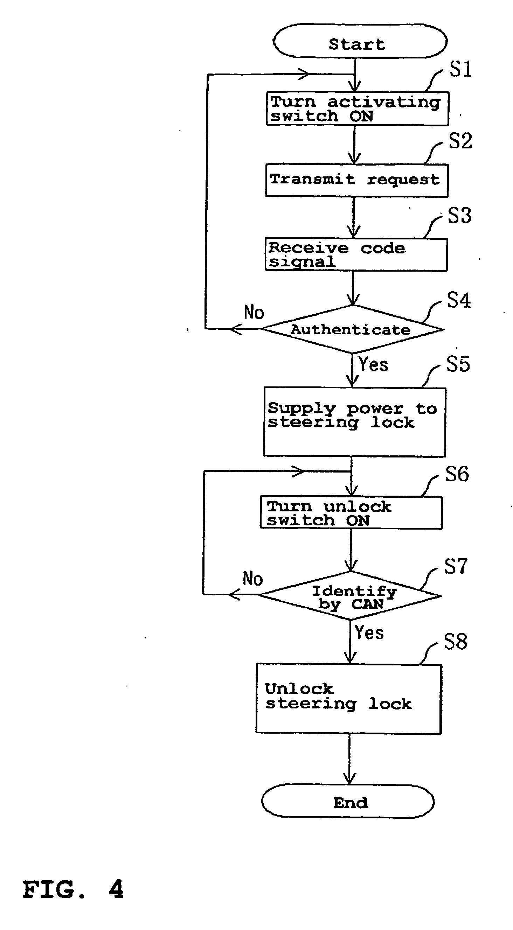

Now, a vehicle control method using the vehicle controller 110 of FIG. 3 will be described with reference to a flowchart shown in FIG. 4.

A rider presses the activating switch 26 provided on the vehicle (the step S1) to turn-ON the power source 23 of the control unit 20 as well as to issue a request signal from a transmitter-receiver 21' provided on the vehicle (the step S2). Upon reception of the request signal, the portable device 10, which the rider carries, sends a code signal back automatically. The transmitter-receiver 21' provided on the vehicle receives the code signal (step S3) and authenticates the signal with a specific reference code preset by the authentication means 22 (step S4).

If authentication is determined to be successful, power is supplied from the control unit 20 to the steering lock 30 (step S5). Under this condition, the unlock switch 33 is operated (step S6), and then the encrypted signal is identified using the CAN system between the control unit 20 and the steering lock 30 via the communication line 40 (step S7). If authentication is successful, the steering lock 30 is unlocked (step S8). These conditions allow the rider to move the vehicle, so that the rider can start vehicle inspection, maintenance or other work immediately. It should be understood that if the authentication fails, the steering lock 30 remains locked, thus providing antitheft protection for the vehicle.

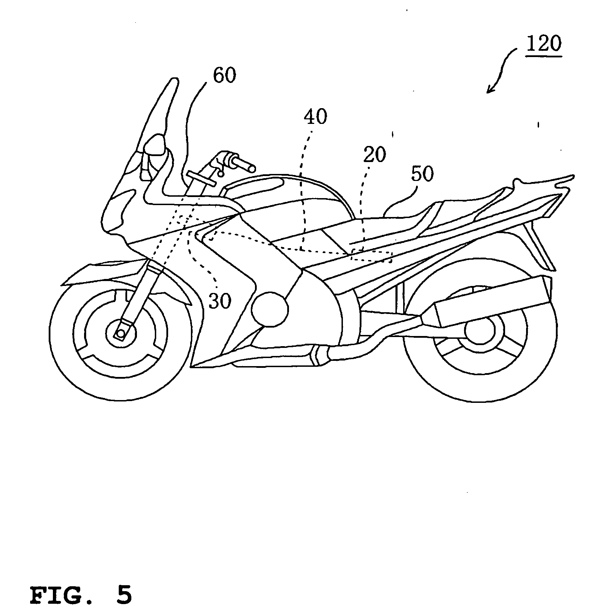

With reference to FIGs. 1 to 4, the description has been made above for the features of the configurations of the vehicle controllers 100, 110 for a two-wheeled motor vehicle. In turn, FIG. 5 illustrates an example in which either one of these vehicle controllers 100, 110 is installed on a two-wheeled motor vehicle 120.

In these vehicle controllers, the control unit 20 and the steering lock 30 may be handled as separate configurations, which can improve layout flexibility in the vehicle. In the example illustrated in FIG. 5, the control unit 20 is located below a seat 50 where extra space is relatively created, while the steering lock 30 is located adjacent to handlebars 60. The control unit 20 and the steering lock 30 are connected to each other via the communication line 40 that forms the CAN system.

The vehicle controller 110 shown in FIG. 3 involves operation of the activating switch 26 and of the unlock switch 33 respectively to activate the control unit 20 and to unlock the steering lock 30 after authentication of the rider. Thus, if these switches are combined into one mechanism, the ease of operation can be improved. To be more specific, a two-stage push-button switch may be adopted, which is designed to function as an activating switch for a push into a first position or as an unlock switch for a push into a second position.

"Two-wheeled motor vehicle" in the embodiments means a motorcycle, including every motor bike and motor scooter, and, more particularly, is a vehicle which can be tumed by tilting the vehicle body. Thus, a vehicle equipped with two or more front wheels and/or two or more rear wheels, thus having three or four (or more) wheels in total is also included in the "autobicycle."

Without any limitation to motorcycles, the teaching of the present invention may also be applied to other vehicles, as long as a vehicle can take advantage of effects of the teaching. This includes any straddle type vehicles, such as four-wheeled buggies or all terrain vehicles (ATV) and snowmobiles.

While the teaching of the invention is explained above by way of the preferable embodiment, such descriptions are not limiting items. Therefore, various modifications may be made.

The teaching of the present invention can provide a vehicle controller for a straddle type vehicle, which offers improved maintenance convenience and high security vehicle antitheft system.

The description above discloses (amongst others) a vehicle controller for a straddle type vehicle including: a portable device for transmitting a signal; and authentication means for receiving and authenticating the signal, in which if the authentication is determined to be successful, power is supplied from a control unit to a steering lock, while communication of an encrypted signal from the control unit to the steering lock is conducted, and then if authentication of the encrypted signal is successful, unlock means for the steering lock is actuated.

According to an embodiment, upon reception of a request signal transmitted from the vehicle through operation of an activating switch, the portable device transmits a code signal, and the authentication means receives and identifies the code signal to determine whether or not the authentication is successful.

Preferably, the unlock means may be an actuator.

The present embodiment provides a vehicle controller for a straddle type vehicle, in which if authentication of a signal transmitted from the portable device is successful, power is supplied from the control unit to the steering lock, while communication of an encrypted signal from the control unit to the steering lock is conducted, and then if authentication of the encrypted signal is successful, the steering lock is unlocked. This can prevent the steering lock from being compulsively unlocked by an unauthenticated driver and improve security of the vehicle antitheft system. The steering lock can be unlocked without starting-up the engine, so that the vehicle can be moved. This facilitates maintenance and other work.

The description further discloses as a particularly preferred embodiment, in order to provide a vehicle controller for a straddle type vehicle, which offers improved maintenance convenience and high security vehicle antitheft system, a vehicle controller provided with a portable device 10 for transmitting a signal and authentication means 22 for receiving and authenticating the signal. If the authentication is determined to be successful, power is supplied from a control unit 20 to a steering lock 30, while communication of an encrypted signal from the control unit 20 to the steering lock 30 is conducted, and then if authentication of the encrypted signal is successful, unlock means (actuator) 31 for the steering lock 30 is actuated.

The description further discloses as a first aspect, a vehicle controller for a straddle type vehicle comprising: a portable device for transmitting a signal; and authentication means for receiving and authenticating the signal, wherein if the authentication is determined to be successful, power is supplied from a control unit to a steering lock, while communication of an encrypted signal from the control unit to the steering lock is conducted, and then if authentication of the encrypted signal is successful, unlock means for the steering lock is actuated.

According to a second aspect, in the vehicle controller for a straddle type vehicle according to the first aspect, upon receiving a request signal transmitted from the vehicle through operation of an activating switch, the portable device transmits a code signal, and the authentication means receives and identifies the code signal to determine whether or not the authentication is successful.

According to a third aspect, the description discloses a vehicle controller for a straddle type vehicle according to the first aspect, wherein the unlock means is an actuator.

## Claims

1. Vehicle controller for a straddle-type vehicle comprising a portable device (10) for transmitting a signal, and a control unit (20) including an authentication means (22) for receiving and authenticating the signal and the controller including a steering lock (30), wherein, upon successful authentication of the signal of the portable device (10), power is supplied to a steering lock (30) of the vehicle, the control unit (20) is configured to communicate an encrypted signal to the steering lock (30), and wherein, upon successful authentication of the encrypted signal, an unlock means (31) for the steering lock (30) is actuated,
**characterized in that**
the control unit (20) includes a power source (23) supplying power to the steering lock (30) of the vehicle to actuate the unlock means (31),
wherein an activating switch (16) is included, through the operation of which a requested signal is transmitted to the portable device (10), and wherein an unlock switch (33) is also included, the operation thereof activates communication of the encrypted signal between the control unit (20) and the steering lock (30).

2. Vehicle controller according to claim 1, **characterized in that** the control unit (20) includes an activating switch (26), wherein upon receiving a request signal transmitted from the vehicle through operation of the activating switch (26), the portable device (10) transmits a code signal, and the authentication means (22) receives and identifies the code signal to determine whether or not the authentication is successful.

3. Vehicle controller according to claim 1 or 2, **characterized in that** the unlock means (31) is an actuator.

4. Vehicle controller according to claim 2 or 3, **characterized in that** the control unit (20) and the steering lock (30) are connected via a communication line (40) established by a commonly used controller area network (CAN) or by a serial communication.

5. Straddle-type vehicle having a vehicle controller according to one of the claims 1 to 4.

6. Straddle-type vehicle according to claim 5, **characterized in that** the control unit (20) and the steering lock (30) are separate units located at different places of the vehicle, and being connected by the communication line (40).

## Patentansprüche

1. Fahrzeug-Steuervorrichtung für ein Spreizsitz-Fahrzeug, die eine tragbare Einrichtung (10) zum Senden eines Signals sowie eine Steuereinheit (20) umfasst, die eine Authentifizierungseinrichtung (22) zum Empfangen und Authentifizieren des Signals enthält, und die Steuervorrichtung ein Lenkschloss (30) enthält, wobei bei erfolgreicher Authentifizierung des Signals der tragbaren Vorrichtung (10) einem Lenkschloss (30) des Fahrzeugs Strom zugeführt wird und die Steuereinheit (20) so konfiguriert ist, dass sie ein verschlüsseltes Signal zu dem Lenkschloss (30) überträgt, und bei erfolgreicher Authentifizierung des verschlüsselten Signals eine Entriegelungseinrichtung (31) für das Lenkschloss (30) betätigt wird,
**dadurch gekennzeichnet, dass**
die Steuereinheit (20) eine Stromquelle (23) enthält, die dem Lenkschloss (30) des Fahrzeugs Strom zum Betätigen der Entriegelungseinrichtung (31) zuführt,
wobei ein Aktivierungsschalter (26) enthalten ist, durch dessen Betätigung ein angefordertes Signal zu der tragbaren Einrichtung (10) gesendet wird, und ein Entriegelungsschalter (33) ebenfalls enthalten ist, bei dessen Betätigung Übertragung des verschlüsselten Signals zwischen der Steuereinheit (20) und dem Lenkschloss (30) aktiviert wird.

2. Fahrzeug-Steuervorrichtung nach Anspruch 1, **dadurch gekennzeichnet, dass** die Steuereinheit (20) einen Aktivierungsschalter (26) enthält, wobei bei Empfang eines Anforderungssignals, das von dem Fahrzeug über Betätigung des Aktivierungsschalter (26) gesendet wird, die tragbare Vorrichtung (10) ein Codesignal sendet, und die Authentifizierungseinrichtung (22) das Codesignal empfängt und identifiziert, um festzustellen, ob die Authentifizierung erfolgreich ist oder nicht.

3. Fahrzeug-Steuervorrichtung nach Anspruch 1 oder 2, **dadurch gekennzeichnet, dass** die Entriegelungseinrichtung (31) ein Stellglied ist.

4. Fahrzeug-Steuervorrichtung nach Anspruch 2 oder 3, **dadurch gekennzeichnet, dass** die Steuereinheit (20) und das Lenkschloss (30) über eine Kommunikationsleitung (40) verbunden sind, die durch ein CAN-Bus-Netzwerk (CAN) oder durch serielle Kommunikation hergestellt wird.

5. Spreizsitz-Fahrzeug, das eine Fahrzeug-Steuervorrichtung nach einem der Ansprüche 1 bis 4 aufweist.

6. Spreizsitz-Fahrzeug nach Anspruch 5, **dadurch gekennzeichnet, dass** die Steuereinheit (20) und das Lenkschloss (30) separate Einheiten sind, die sich an verschiedenen, Stellen des Fahrzeugs befinden und durch die Kommunikationsleitung (40) verbunden sind.

## Revendications

1. Dispositif de commande de véhicule pour un véhicule du type à enfourcher, comportant un dispositif portatif (10) pour transmettre un signal, et une unité de commande (20) contenant des moyens d'authentification (22) pour recevoir et authentifier le signal, et le dispositif de commande contenant un antivol de direction (30), étant précisé que lors d'une authentification réussie du signal du dispositif portatif (10), un courant est transmis à un antivol de direction (30) du véhicule, que l'unité de commande (20) est conçue pour communiquer un signal crypté à l'antivol de direction (30), et que lors d'une authentification réussie dudit signal crypté, des moyens de déverrouillage (31) pour l'antivol de direction (30) sont actionnés,
**caractérisé en ce que** l'unité de commande (20) contient une source de courant (23) qui fournit du courant à l'antivol de direction (30) du véhicule afin d'actionner les moyens de déverrouillage (31),
étant précisé qu'un interrupteur d'activation (26) est prévu, grâce au fonctionnement duquel un signal requis est transmis au dispositif portatif (10), qu'un interrupteur de déverrouillage (33) est également prévu, dont le fonctionnement active la communication du signal crypté entre l'unité de commande (20) et l'antivol de direction (30).

2. Dispositif de commande de véhicule selon la revendication 1, **caractérisé en ce que** l'unité de commande (20) contient un interrupteur d'activation (26), étant précisé que lors de la réception d'un signal requis transmis à partir du véhicule grâce au fonctionnement de l'interrupteur d'activation (26), le dispositif portatif (10) transmet un signal de code, et les moyens d'authentification (22) reçoivent et identifient le signal de code pour déterminer si l'authentification est réussie ou pas.

3. Dispositif de commande de véhicule selon la revendication 1 ou 2, **caractérisé en ce que** les moyens de déverrouillage (31) sont constitués par un actionneur.

4. Dispositif de commande de véhicule selon la revendication 2 ou 3, **caractérisé en ce que** l'unité de commande (20) et l'antivol de direction (30) sont reliés par l'intermédiaire d'une ligne de communication (40) établie par un bus CAN d'usage courant ou par une communication série.

5. véhicule du type à enfourcher comportant un dispositif de commande de véhicule selon l'une des revendications 1 à 4.

6. Véhicule du type à enfourcher selon la revendication 5, **caractérisé en ce que** l'unité de commande (20) et l'antivol de direction (30) sont des unités distinctes qui sont placées à différents endroits du véhicule et qui sont reliées par la ligne de communication (40).
